# EUROPEAN PATENT SPECIFICATION

(11) **EP 4 267 340 B1**
(45) Date of publication and mention of the grant of the patent: **28.01.2026**
(21) Application number: 21908214.6
(22) Date of filing: 23.12.2021
(51) Int. Cl.: B23K 26/342, B23K 26/60, B23K 28/02, B23K 9/10, B23K 9/173, B23K 26/00, B23K 26/14, B23K 26/348, B23K 26/70, B23P 6/00, B23K 103/04

(54) **REPAIR WELDING METHOD BY LASER DEPOSITION USING A FILLER WIRE**
REPARATURSCHWEISSVERFAHREN DURCH LASERAUFTRAGSSCHWEISSEN UNTER VERWENDUNG EINES FÜLLDRAHTES
PROCÉDÉ DE SOUDAGE PAR RÉPARATION PAR DÉPÔT LASER À L'AIDE D'UN FIL DE REMPLISSAGE

(30) Priority: 23.12.2020 US 202063129883 P
(43) Date of publication of application: 01.11.2023
(73) Proprietor: Her Majesty the Queen in Right of Canada as Represented by The Minister of Natural Resources, Ottawa, ON K1A 0E4 (CA)
(72) Inventor: CHEN, Zheng, Dundas, Ontario L9H 6T7 (CA); HUANG, Jin, Ottawa, Ontario K1C 5C9 (CA)
(74) Representative: Westphal, Mussgnug & Partner Patentanwälte mbB
(86) International application number: PCT/CA2021/051883
(87) International publication number: WO 2022/133613

(56) References cited:
- WO-A1-2020/203411
- CN-A- 109 434 286
- CN-A- 111 910 183
- CN-A- 112 108 769
- DE-A1- 102019 202 317
- US-A- 4 737 612
- US-A- 5 900 170
- US-A1- 2014 008 343
- US-A1- 2017 368 637
- PHILLIPS R. H, METZBOWER E. A: "Laser Beam Welding ofHY80 and HY100 Steels Using Hot Welding Wire Addition", WELDING JOURNAL, vol. 71, no. 6, 30 June 1992 (1992-06-30), pages 201 - 208, XP055249188, ISSN: 0043-2296
- METZBOWER E. A., BHADESHIA H. K. D. H., PHILLIPS R. H.: "Microstructures in hot wire laser beam welding of HY 80 steel", MATERIALS SCIENCE AND TECHNOLOGY, vol. 10, no. 1, 31 January 1994 (1994-01-31), GB , pages 56 - 59, XP009538434, ISSN: 0267-0836, DOI: 10.1179/mst.1994.10.1.56
- KOTTMAN ET AL.: "Laser Hot Wire Process: A Novel Process for Near-Net Shape Fabrication for High-Throughput Applications", THE JOURNAL OF THE MINERALS, vol. 67, no. 3, 21 January 2015 (2015-01-21), pages 622 - 628, XP035455826, ISSN: 1047-4838, DOI: 10.1007/s11837-014-1288-1

## Description

The present invention relates to welding processes and systems. In particular, the invention relates to a method of build-up welding involving hot filler wire for various welding positions and orientations, see claim 1.

### BACKGROUND OF THE INVENTION

Low-alloy quench and tempered steels have high strength and toughness. Because they are reasonably economic and permit high design stresses, they have become popular in the fabrication of various structures for critical components of submarines, pressure vessels, power systems, nuclear and chemical food processing plants, and petroleum industries. Such steels frequently contain Ni, Cr, Mo, and low wt. % of carbon.

Although components made from quench and tempered steels exhibit a long service life, it is still possible that wear, erosion, and corrosion will occur, necessitating repair of components made from such steels.

After having removed a damaged or worn area or region of the steel, their repair is usually carried out by welding. Damaged components may be completely repaired and restored to their original geometry and dimension. This kind of repair welding is usually termed "build-up welding", "additive manufacturing repair welding", or "deposition welding", and has been extensively used in various industries.

"Build-up welding", however, is different from "cladding". Cladding, by arc or laser welding, specifically involves the creation of a new surface layer having a different composition from that of the base material in order to increase resistance to wear, corrosion or heat. In contrast, build-up welding is employed to restore a worn or damaged component to restore its sufficient and required mechanical properties.

After repair welding, post-weld heat treatment is usually applied to the repaired component to reduce residual stresses and to temper hard and brittle microstructures, if any have been caused by the welding process.

One challenge associated with repair welding is that it is not always possible to repeat the original post-weld heat treatment. Under such circumstances, it is essential that all regions of the repair weld, i.e., repair weld metal and the associated heat affected zone have sufficient strength and fracture toughness to avoid brittle fractures during subsequent testing and service.

Several techniques, often called temper bead welding, based on the manual metal arc process, have been developed for repair welding without post-weld heat treatment. Those include, for example, the half-bead technique and two-layer technique. Section IX of the American Society of Mechanical Engineers Codes allows both repair welding techniques to be carried out without the need for post-weld heat treatment. However, both techniques have their own drawback and limitations:
1. For the half bead technique, a major limitation is the grinding stage of the previous layer before subsequent welding, which may be difficult to control and may be time-consuming.
2. For the two-layer technique, which utilizes a controlled method of weld bead deposition to achieve microstructural refinement of the heat affected zone, in which the second layer is used to control the eventual microstructure and grain size in the heat affected zone of the first layer, the heat input of the second layer is required to be 1.5 to 2 times of the first layer to refine the heat affected zone microstructure of the first layer. One limitation associated with the two-layer technique is that the second layer weld metal deposited with a higher heat input may not have a sufficient and required toughness in the as-welded condition for certain weld consumables. Besides, increasing heat input to deposit the second layer may result in higher distortion to the component. Another limitation associated with the two-layer technique relates to welding position. Two-layer welding processes that operate in a position other than a flat position are prone to problems. Most two-layer technique welding processes, including, for example, shield metal arc welding, manual or semi-automatic gas metal arc welding, flux-cored arc welding, plasma arc welding, are difficult to perform to achieve high levels of heat affected zone refinement in the vertical position and/or overhead positions. In vertical position and/or overhead positions, it is more difficult to maintain the recommended welding parameters, for example, the weld bead profiles, and such deviations may result in loss of the heat affected zone refinement.

Further limitations associated with the half-bead and the two-layer techniques are that these methods cannot eliminate the requirement of pre-heating before welding. Instead, preheating favours higher levels of the heat affected zone refinement by extending the depth of the refined zone.

Preheating can reduce the risk of cold cracking in the heat affected zone. However, preheating is costly, time-consuming, and sometimes may even be difficult to perform for a large component during the on-site repair.

In addition, in typical repair welding processes, such as shield metal arc welding and gas metal arc welding, slag materials or metal oxide by-products are created that must be scraped as the subsequent layer is deposited thereon. Thus, after a layer of material is welded thereon, the slag is typically manually removed using all or a combination of descalers, hammering, and wire brushing, and another layer is added thereto.

Invariably, due to the chaotic nature of the welding process, human errors or lack of attention, weld slag is often entrapped below and within the weld repair surface, which in turn may weaken the integrity of the repair. As a result, repairing worn or damaged surfaces of component is often slow, tedious, inefficient, and operator dependent.

As an example, the pressure hull of a submarine, designed to resist loads from external hydrostatic pressure applied when the vessel is submerged, typically consist of cylindrical and conical compartments made from internally stiffened high strength steel plates, for example, HY-80 and HY-100 steels. If the pressure hull is not sufficiently protected, the operation of submarines in saltwater leads to corrosion. The pressure hull material can also degrade by other mechanisms such as mechanical damages. The degradation of material properties and significant loss in the thickness of material resulted from damages have the potential of significantly reducing collapse pressure and lead to restrictions on the operational limits of a submarine vessel.

Remedial measures to repair material damaged by corrosion and other damages include:
1. Removal and replacement of the damaged components, however, this can be expensive and time-consuming.
2. Removal of damaged material by grinding after which the thinned hull plating is built up using several layers of weld build-up metal. This method reclaims lost material; however, significant residual stresses and distortions may be introduced by welding.
3. Upon applying weld build-ups on the high strength steel substrate, the toughness of the heat-affected zone and the weld metal are usually much lower than that of the substrate.
4. Cold cracking may occur in the heat-affected zone of high strength steel after build-up welding.

Build-up welding may sometimes be the only feasible repair method in cases where more than one frame is affected. Corrosion wastage and other damages of submarine pressure hulls can be repaired by build-up welding, which deposits weld material on a base material in order to restore or increase material thickness, or improve surface properties. The build-up welding repair method is attractive as its cost is significantly lower than the replacement of pressure hull sections.

Despite the attractiveness of this technique, the modification of the residual strain profile, increases in distortion, variations in the thickness, or modifications to mechanical properties of the pressure hull may cause concerns related to submarine structural integrity.

One of the concerns is that the relatively higher heat input associated with the conventional welding methods will result in large distortion, high residual stress, undesirable microstructure and unacceptable mechanical properties after build-up welding. For example:
1. The relatively higher heat input associated with conventional welding methods will result in significant grain growth in the heat affected zone to form a coarse-grained heat affected zone adjacent to the fusion boundary. This coarse-grained heat affected zone can transform into a hard and brittle martensite phase during cooling. The formation of the brittle martensite phase in the heat affected zone can reduce the toughness of heat affected zone and increase its susceptibility to cold cracking.
2. The relatively higher heat input associated with conventional welding methods will result in a slow cooling rate after build-up welding and produce coarse solidification microstructure and less volume percentage of acicular ferrite and bainite, hence reducing the toughness of weld build-up itself.

In order to minimize distortion, reduce residual stress, improve the toughness of weld metal and the heat affected zone, and avoid cold cracking. The minimum pre-heating temperature of 90 °C is the standard practice when welding HY-80 steel according to the current specifications where the conventional welding methods is utilized, including shield metal arc welding, manual or semi-automatic gas metal arc welding, flux-cored arc welding, plasma arc welding.

Laser additive manufacturing typically produces a high-quality build-up material that exhibits low dilution, low porosity, and good surface uniformity. Low power density laser build-up welding also produces minimal heat input on the part, which largely eliminates distortion and the need for post-processing, and avoids the loss of alloying elements or hardening of the base material. In addition, the rapid natural quench experienced with laser build-up welding may result in a fine grain structure in the weld metal.

Moreover, most laser additive manufacturing processes (welding or cladding) employed in a variety of industries are aimed for improving the surface and near-surface properties (for example, wear, corrosion or heat resistance) of a component.

However, one major drawback of most laser additive manufacturing processes is that they are carried out in the flat position (1G position), which limits their applications of on-site in-situ welding repairs.

Efforts have been made previously to improve such welding techniques. For example, by Stelling et al. disclosed in "Vertical-Up and -Down Laser Plasma Powder Hybrid Welding of a High Nitrogen Austenitic Stainless Steel", Weld. World, 2005, vol. 49, no. 5/6, pp. 45-49, laser plasma powder arc welding techniques have been refined to achieve out-of-position or non-horizontal welding of components, including vertical-up and vertical-down welding.

Other examples present options for low-heat input welding repair. For example, United States Patent 7,600,666 to Rabanovich discloses a system comprising a V-shaped feedstock material that closely conforms to specific types of damage that requires repair, such as wear, fatigue and corrosion cracks of thin-walled components.

Further welding methods are disclosed by US 2014/008343 A1 (describing the preamble of claim 1), CN 109 434 286 A, CN 111 910 183 A and CN 112 108 769 A.

However, there remains a need for reliable and precise weld repair techniques applicable to more general low-alloy steels, such as quench and tempered alloys, which produce consistent weld beads and long-lasting weld repairs, without resorting to or relying upon pre-heating and post-weld heat treatments of the repaired component.

There remains also a need for low heat input repair welding processes with reduced or no distortion of the component(s) after welding.

There remains also a need for repair welding processes that exhibit improved metallurgical characteristics of the base metal within the heat affected zone, and which produce welded metals with required mechanical properties.

There remains also a need for repair welding processes that can provide more precise control in all welding positions to facilitate in situ or on-site repair.

Further, there remains a need for laser build-up welding or laser additive manufacturing processes having large deposition rates using both powder feed and hot or cold filler wire.

Further, there remains a need for laser build-up welding processes for worn structures that are more precisely controllable, and which control and reduce an amount of heat input into the structure to optimize the mechanical properties of the weld metal, to help meet the associated standards and to minimize distortion of the structure.

Further, there remains a need for laser build-up welding or laser additive manufacturing processes with the option to utilize a variety of materials, such as powder, wire, strip, and other like materials.

Still further, there remains a need for laser build-up welding or laser additive manufacturing processes that can be utilized, in some embodiments, for building up a variety of 3D shapes, providing more control of the final shape of the repair and reducing or eliminating subsequent machining and grinding steps.

Moreover, there remains a need for laser build-up welding processes that are robotically-controlled. Specifically, there remains a need for laser build-up welding or laser additive manufacturing processes that are automatically controlled which achieves high levels of welding and provides high- quality laser welded build-ups.

There remains a need to develop a laser additive manufacturing process for structural repair application, specifically for HY-80 steel components repair by laser additive manufacturing process.

### SUMMARY OF THE INVENTION

The present invention discloses a novel welding method by using low power density laser direct energy deposition with a filler wire, preferably a hot filler wire, as a filler material to produce welded build-ups, see claim 1.

The term "low power density" would be understood by a person skilled in the art. According to the ASME Boiler & Pressure Vessel Code (BPVC) Section IX, low-power density laser beam (LLBW) is a variation of the laser beam welding process in which the coherent light beam employs reduced power density, such that coalescence of materials is achieved by conduction (i.e., melt-in) without keyhole welding.

The terms "filler wire" and "hot filler wire" would be understood by a person skilled in the art. Regarding the temperature rage, hot filler wire means that the temperature may be as high as possible but below the melting point of the filler wire and not affect its feeding into the molten pool.

An object of the present invention is to provide a method of depositing filler material upon a prepared surface to build up the surface to repair the same, by which problems of the prior art described above can be minimized.

In selected embodiments, the method does not necessarily require a preheat and full post-weld heat treatment of the component or the entire weld repair region of the component and therefore selected embodiments may avoid the disadvantages associated with performing such treatments. Instead, some embodiments herein disclosed provide relatively uncomplicated methods to yield a repaired article with mechanical and environmental properties which are comparable to that of the base material of the article.

According to selected embodiments, though such methods are particularly suited for the repair of quench-and-tempered low-alloy steels, selected methods may be applied to other low-alloy steels, as the term is understood by those skilled in the art.

In some embodiments, this heating is accomplished by a low power density laser beam welding process.

Stated generally, selected embodiments comprise a laser hot filler wire build-up welding process for applying a weld build-up to a high strength low alloy steel, particularly a quench-and-tempered steel article. A laser beam, as the first heat source, melts a portion of the surface of the substrate to form a molten pool. A filler wire, preferably a hot filler wire, heated by an electric current as a second heat source and the filler material is inserted into the molten pool to form a first continuous bead of build-up material on the surface of the substrate. A second continuous bead of the build-up material is also applied, wherein the second bead portion partially overlaps with the first bead portion to form the first layer. The second and subsequent layers may be deposited on top of the first layer in the same way as the first layer.

In another embodiment, the material deposition as described herein may be accomplished in combination with an inert gas, such as for example Argon gas, to minimize or to eliminate the development of slag, metal oxide by-products or other undesirable components when depositing metal material onto the prepared surface.

In another embodiment, the heat input for depositing the first two layers is higher than the heat input for depositing the subsequent layers.

In another embodiment, the thickness of the first layer is the same, or optionally less than the thickness of the second layer.

In another embodiment, the welding speed for depositing the first two layers is slower than the welding speed for depositing the subsequent layers.

According to the claimed invention, there is provided a build-up welding method by low power density laser direct energy deposition upon a substrate to be welded, without preheating the substrate, or preheating the substrate to a temperature below 90 °C as defined in claim 1, the method comprising the steps of:
directing a laser beam onto the substrate to melt a portion of the substrate to form a molten pool;
supplying a a hot filler wire, as a filler material to produce a welded build-up as a first layer;
advancing the filler wire towards and into the molten pool formed by the laser beam;
wherein the filler wire is resistance-heated, optionally by a separate energy source;
optionally electricity is shorted to prevent a traditional arc such that the filler wire reaches its melting point and contacts the molten pool; and
wherein the laser beam is directed perpendicular or substantially perpendicular to the substrate.

According to some embodiments of the invention, the laser direct energy deposition is performed with a CO₂ laser, a YAG laser, a diode laser, a disc laser or a fiber laser.

According to some embodiments of the invention, the method produces a crack-free heat affected zone.

According to some embodiments of the invention, the method produces weld metal with an optimized microstructure and acceptable mechanical properties.

According to some embodiments of the invention, the welding parameters are expressed by a heat input value, wherein the minimum heat input may be determined, which is sufficient to avoid cold cracking in a heat affected zone and/or other defects such as, for example, lack of fusion, which may be formed between the substrate and the first layer weld metal or in the weld metal during multi-pass and multi-layer welding and the maximum heat input may be determined, which is insufficient to deteriorate a Charpy V-notch toughness and fracture toughness of the weld metal.

According to some embodiments of the invention, a first layer of weld material is deposited with a heat input between the minimum and the maximum heat input, preferably deposited with a maximum allowable heat input to avoid deterioration of Charpy V-notch toughness and fracture toughness of the weld, with an increased cooling time t_{8/5} and t_{8/3} to minimize the formation of untempered martensite in the heat affected zone to avoid cracks.

According to some embodiments of the invention, a second layer of welded material is deposited on top of the first layer with a heat input between the minimum and the maximum heat input, preferably with the maximum allowable heat input, to temper the martensite, preferably to refine the microstructure of the heat affected zone associated with the first layer. After welding a second layer, the hardness of the heat affected zone is reduced.

According to some embodiments of the invention, subsequent layers of welded material are deposited with a heat input between the minimum and the maximum heat input, preferably with the minimum heat input while maintaining the required interpass temperature to maximize the Charpy V-notch toughness and fracture toughness of the weld metal.

According to some embodiments of the invention, the laser beam having a spot size, on the surface of the substrate that is from 3 mm to 10 mm, preferably from 5 mm to 7mm, in diameter.

According to some embodiments of the invention, the laser beam having a power of from 2 to 8 kW, preferably from 3 to 6 kW, and more preferably from 3.5 to 5 kW.

According to some embodiments of the invention, the welding method proceeds at a speed of 5-20 mm/s, preferably from 6-15 mm/s, more preferably from 6-8 mm/s.

According to some embodiments of the invention, the laser power density is in the range of 10-40 kW/cm², preferably 12-28 kW/cm².

According to some embodiments of the invention, the heat input from the laser beam is in a range of from 0.2-1.2 kJ/mm, preferably from 0.5-0.8 kJ/mm.

According to some embodiments of the invention, the laser beam is directed at an angle of 3-15 degrees, preferably 5-10 degrees, more preferably 6-8 degrees, compared to perpendicular to the substrate, optionally towards the toe region of the previous bead.

According to some embodiments of the invention, an offset distance between two adjacent beads may be from 50-70% of the width of the bead, preferably, from 55-60% of width of the bead.

According to some embodiments of the invention, the filler materials comprise solid wire, flux-cored wire, or powder.

According to some embodiments of the invention, the filler wire is fed using a wire feeder, such as a gas metal arc welding torch, employing argon shielding gas.

According to some embodiments of the invention, a welding torch applies filler wire to the molten pool, optionally behind the laser beam along the welding direction, optionally at an angle of 30-80 degrees, preferably 40-55 degrees, compared to perpendicular to the substrate.

According to some embodiments of the invention, the welding torch employs filler wire selected from the group consisting of, but not limited to: ER70s, ER100s, ER120S, Spoolarc^{™} 86, Spoolarc^{™} 95. The diameter of the filler wire is from 0.9-3.2 mm, preferably from 1.2-1.6 mm.

According to the invention, the wire feed speed is adjusted to a value to produce a weld bead having an aspect ratio of 3 to 6, preferably 4 to 5. The aspect ratio is defined as the ratio of the bead width divided by the bead height.

According to some embodiments of the invention, the wire feed speed is different for different layers of welding.

According to some embodiments of the invention, the filler wire is heated by an electric current of from 70-120 A, preferably 80-100 A, before being inserted into the molten pool.

According to some embodiments of the invention, the method does not need to preheat the substrate.

According to some embodiments of the invention, the method is at least partially automated.

According to some embodiments of the invention, an operator may program a laser welding system with a specific surface to deposit the metal thereto.

According to some embodiments of the invention, the method automatically determines how much metal to deposit and where to deposit to achieve the finished structure.

According to some embodiments of the invention, the laser build-up welding process is carefully controlled by utilizing different optics for the laser energy itself or nozzles to configure the application of the filler metal source and/or of the inert gas thereto to eliminate slag.

According to some embodiments of the invention, the method is carried out in a flat position (1G), a horizontal position (2G), or a vertical uphill (3G) position.

According to some embodiments of the invention, the method is carried out with hot Spoolarc^{™} 95 filler wire onto the surface of HY-80 steel in a flat position (1G), a horizontal position (2G), or a vertical uphill (3G) position.

Other features and advantages of the present invention will become apparent from the following detailed description and the accompanying drawings and examples, which illustrate, by way of example, the principles of the invention.

### BRIEF DESCRIPTION OF THE DRAWINGS

The below and/or other aspects of the invention will be more apparent by describing in detail the exemplary examples of the invention with reference to the accompanying drawings, wherein:
Figure 1 is a diagrammatical representation of an exemplary example of a system of the present invention; and
Figure 2 is a cross-sectional view of the build up layers according to the present invention.

### DETAILED DESCRIPTION OF THE INVENTION

It is to be understood that the disclosure is not limited in its application to the details of the embodiments as set forth in the following description. The invention is capable of other embodiments and of being practiced or of being carried out in various ways.

Furthermore, it is to be understood that the terminology used herein is for the purpose of description and should not be regarded as limiting. Contrary to the use of the term "consisting", the use of the terms "including", "containing", "comprising", or "having" and variations thereof is meant to encompass the items listed thereafter and equivalents thereof as well as additional items. The use of the term "a" or "an" is meant to encompass "one or more". Any numerical range recited herein is intended to include all values from the lower value to the upper value of that range.

In general, low alloy steels are required to be preheated to a specific temperature (T_{PH}), prior to welding. It has been suggested in the art that T_{PH} for any given steel should be about 50 °F above the martensite start temperature (M_{S}) for the particular steel being welded. Most low alloy steels, however, have fairly high M_{S} temperatures, making welding at or above those temperatures somewhat uncomfortable for the welder, thereby potentially compromising weld quality. For such steels, therefore, manufacturers often opt for T_{PH} temperatures below M_{S}.

Preheating drives moisture and other contaminants off the joint; moisture, lubricants, and other contaminants are sources of hydrogen. More importantly, preheating serves to reduce the rate at which the metal cools down from the welding temperature to T_{PH}. This is so whether preheating is above or below M_{S}. Cooling rate reductions can lead to a general reduction in residual stress magnitudes, and also allow more time for hydrogen removal. Furthermore, cooling rate reductions can affect austenite transformation to products other than martensite, before reaching M_{S} (T_{PH} < M_{S}) or T_{PH} (T_{PH} > M_{S}).

For example, most low alloy steels that may be susceptible to hydrogen-induced cracking transform from austenite during cooling through the 800-500 °C (1470-930 °F) or 800-300 °C (1470-572 °F) temperature range. The length of time, t_{8/5} (seconds), or t_{8/3} (seconds), a steel spends in this range during cooling, will establish its microstructure and, hence, its susceptibility to cold cracking. To maximize cracking resistance, a microstructure that is free of untempered martensite is desired; that is, the austenite would have transformed to ferrite + carbide and no austenite will be available to transform to martensite upon reaching Ms.

For some low alloy steels, there is usually a required minimum preheat temperature defined in the welding procedure specification or associated standards. The minimum preheat temperature can also be estimated utilizing a particular carbon equivalent (CE) formula, that can be used to estimate the preheat temperatures required for crack-free welding.

In some embodiments, welding is carried out under nil preheat conditions to determine the optimized welding parameter range while maintaining the required interpass temperature. The optimized welding process, with selected parameters, produces a weld metal with an optimized microstructure and particularly acceptable mechanical properties. The combination of the welding parameters is expressed by heat input. A minimum and maximum heat input can be defined. If the welding heat input is less than the minimum heat input, defects such as, for example, lack of fusion, which may be formed between the substrate and the first layer or between the weld beads, or in the weld metal during multi-pass and multi-layer welding. On the other hand, if the welding heat input is larger than the maximum heat input, the mechanical properties, particularly a Charpy V-Notch toughness and a fracture toughness of the weld metal, may not achieve acceptable value required by standards.

In other embodiments, during welding without preheating, the first layer is deposited with a heat input between the minimum and the maximum heat input, preferably with the maximum allowable heat input, to reduce the cooling rate, increase the cooling time t_{8/5} and t_{8/3}, to avoid the formation of cracks and to minimize the formation of untempered martensite in the heat affected zone of the first layer.

In other embodiments, during welding without preheating, the second layer is deposited on top of the first layer with a heat input between the minimum and the maximum heat input, preferably with the maximum allowable heat input, preferably to refine the microstructure, or to temper the martensite of the heat affected zone associated with the first layer.

In other embodiments, subsequent layers are deposited with a heat input between the minimum and the maximum heat input, preferably with the minimum heat input while maintaining the required interpass temperature to maximize the fracture toughness of the weld metal.

In other embodiments, the laser may provide a laser beam having a spot size, round or square or hexagonal, on the surface of the substrate of for example from 3 mm to 10 mm, preferably from 5 mm to 7mm.

In other embodiments, the laser may provide a laser beam having a power of for example from 2 to 8 kW, preferably from 3 to 6 kW, and more preferably from 3.5 to 5 kW.

In other embodiments, the welding may proceed at a speed of 5-20 mm/s, preferably from 5-10 mm/s, more preferably from 6-8 mm/s.

In other embodiments, the laser power density may be in the range of 10-40 kW/cm², preferably 12-28 kW/cm².

In other embodiments, the heat input from the laser beam may be range from 0.2 -1.2 kJ/mm, preferably from 0.5-0.8 kJ/mm.

In other embodiments, the laser beam may optionally be directed perpendicular or substantially perpendicular to the substrate to deposit the first bead.

In other embodiments, the laser beam may be optionally at an angle of 3-15 degrees, preferably 5-10 degrees, more preferably 6-8 degrees, compared to perpendicular to the substrate towards the toe region of the previous bead.

In other embodiments, the offset distance between two adjacent beads may be from 50-70% of the width of the bead, preferably, from 55-60% of the width of the bead.

In other embodiments, the filler materials may be in the form of solid wire, flux-cored wire, or powder. In the cases of wire, the wire may be fed using a suitable wire feeder, for example, a gas metal arc welding torch, employing argon shielding gas. In other embodiments the welding torch may apply filler wire to the molten pool, optionally behind the laser beam along the welding direction at an angle of 30-80 degrees, preferably 45-55 degrees, compared to perpendicular to the substrate.

In other embodiments, the filler materials may be in the form of powder. The powder may be fed using a suitable powder feeder and a powder feed nozzle, employing argon shielding gas. In other embodiments the powder feed nozzle may apply filler powder to the molten pool, optionally coaxial with the laser.

In other embodiments, optionally, the welding torch may employ filler wire selected from the group consisting of, but not limited to: ER70s, ER100s, ER120S, Spoolarc^{™} 86, Spoolarc^{™} 95. The diameter of the wire is from 0.9 -3.2 mm, preferably from 1.2- 1.6 mm.

The wire feed speed is adjusted to the value to produce a weld bead having an aspect ratio from 3 to 6, more preferably 4 to 5. The aspect ratio is defined as the ratio of the bead width divided by the bead height.

In other embodiments, the wire is, optionally, heated by the electric current from 70-120 A, preferably 80-100 A, before being inserted into the molten pool, preferably avoiding the creation of an arc between the wire and the molten pool.

Precise control of the laser deposition process described herein may, at least in some embodiments, be accomplished automatically. Specifically, an operator may program the laser cladding system with a specific surface to deposit the metal thereto. In an alternate embodiment, the system may automatically determine how much metal to deposit and where to deposit to achieve the finished structure. Moreover, the laser deposition process may be carefully controlled by utilizing different optics for the laser energy itself or nozzles to configure the application of the filler metal source and/or of the inert gas thereto to eliminate slag.

### Examples:

The following examples are merely exemplary and in no way limit the scope of various embodiments herein disclosed, nor the scope of the appended claims.

Selected embodiments provide better control of certain welding variables to help reduce or eliminate the condition that promote distortion. This includes reducing heat input using high speed welding or using a low heat input welding process. In addition, the toughness of weld metal and heat affected zone can also be improved using a low heat input welding process.

Certain embodiments provide a welding method by using laser direct energy deposition with a hot filler wire as a filler material to produce welded build-ups. Such methods refer to a category of additive manufacturing. Such methods are low heat input processes, conceptually similar to arc welding methods, but the laser is used to melt a very small portion of the substrate to form a molten pool. Filler wire is advanced towards a workpiece and the molten pool. The filler wire is resistance-heated only by a separate energy source and the electricity is shorted to prevent a traditional arc such that the filler wire approaches or reaches its melting point and contacts the molten pool. The heated filler wire is fed into the molten pool formed by the laser beam to carry out the hot filler wire build-up welding process. Laser build-up welding is commonly performed with CO₂ laser, various types of Nd: YAG laser, and more recently, fiber lasers.

In accordance with selected embodiments, there is provided an apparatus and set-ups to carry out laser additive manufacturing process in different positions, including vertical uphill (3G) position.

In accordance with selected embodiments, there is provided a method that includes procedures and parameters to carry out laser additive manufacturing process.

In accordance with selected embodiments, there is provided a process and parameters to produce metallurgical sound weld build-ups on the surface of the substrate using laser additive manufacturing process at the vertical uphill (3G) position.

In accordance with selected embodiments, there is provided a process and parameters to produce high strength low alloy steel build-up using laser hot filler wire additive manufacturing process with solid filler wire such as, but not limited to Spoolarc^{™} 95 on an HY-80 steel substrate.

In accordance with selected embodiments, there is provided a process and parameters using laser additive manufacturing process to produce material build-up with mechanical properties superior to those produced by conventional arc welding.

Selected embodiments provide a low power density laser additive manufacturing process with hot filler wire that does not require preheating of the base metal or preheating to a temperature below 90 °C.

Selected embodiments provide a system and apparatus for vertical uphill laser additive manufacturing process.

Selected embodiments provide a method and parameters of laser additive manufacturing process with hot Spoolarc^{™} 95 filler wire onto the surface of HY-80 steel in the vertical uphill (3G) position.

In certain embodiments, material build-up produced by selected methods shows superior mechanical properties to those produced by conventional arc welding.

Selected embodiments provide a low power density laser additive manufacturing process of Spoolarc^{™} 95 filler wire onto HY-80 steel substrate to produce weld build-ups with superior mechanical properties.

Selected embodiments provide a build-up welding without the need for preheating on HY-80 steel or other steel.

### Base Materials for Laser Hot Filler Wire Build-up Welding

HY-80 steel plate with a thickness of 1.5" (38 mm) was used as the substrate for the laser hot filler wire build-up welding. The HY-80 plates were manufactured by ArcelorMittal Plate LLC.

The plates were surface milled to remove primer and scale, followed by sectioning into smaller pieces. The flat steel pieces were used for bead-on-plate welding to develop and optimize welding parameters and procedures. Grooved plates were machined into the surfaces to accept the weld build-up material for qualification tests. The design of the groove also simulates the expected situation in an actual welding repair, where the edges of the repaired region would be ground to a gradual slope in a typical weld build-up edge preparation.

### Filler Materials for Laser Hot Filler Wire Build-up Welding

The filler wire chosen for laser hot filler wire build-up welding should be suitable for use with the substrate. The filler material used is 1.2 mm diameter Spoolarc^{™} 95 filler wire, which is supplied by ESAB.

### Laser Build-up Welding Setup and Parameters

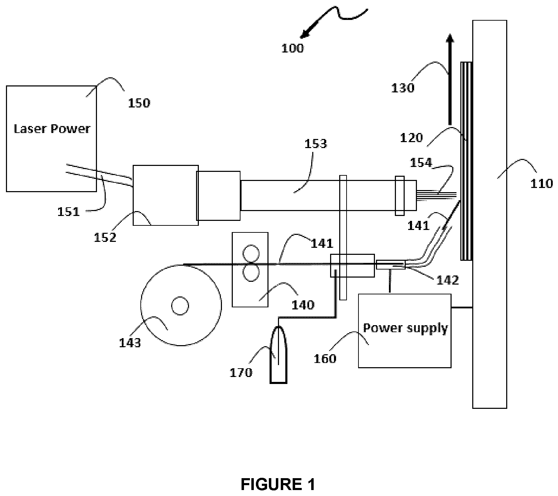

The low power density laser hot filler wire build-up system **100** is shown in Figure 1.

Referring to Figure 1, laser build-up welding was conducted using a 4 kW continuous-wave fiber laser **150** (IPG YLS-4000, 1070 nm wavelength) and HIGHYAG BIMO product line optics module **152** with a collimating module of M = 1.20, numerical aperture = 0.150, f = 167 mm, and focusing module: M=2.3, f = 460 mm. A 600 µm fiber **151** was employed to deliver the laser beam **154** from the laser system to the optics module **152** at the worksite with a protect tube **153.** This combination gives a focused hexagon spot size measuring 6 mm from flat side to flat side on the focal point. The focal point was on the surface of the substrate **110** initially, and moved to the surface of the built up layers **120** accordingly during build-up welding.

A Tip Tig^{™} hot-wire system **140** was used to feed a filler wire **141** from a wire source **143** into a weld pool. A gas metal arc welding torch/nozzle **142** was used to feed the filler wire **141** with a stick-out length of approximately 2", the torch/nozzle **142** was straight with 3/4" inner diameter (part # Tregaskiss 451-5-75).

An electric current of 100 A at 5 volts supplied by a power supply **160** was used to preheat the filler wire **141** to increase the deposition efficiency and to reduce the required laser power to melt the solid wire. Argon gas **170** was used as a shielding gas with a flow rate of 23 I/min, and was directed to the molten pool on the surface of the workpiece **110.**

The build-up welding parameters are listed in Table 1.

**Table 1 Laser Build-up Welding Parameters**

| **Base material** | | **HY-80** |
|---|---|---|
| Laser Power (kW) | Set | 3.8 |
| | Min. | 3.5 |
| | Max. | 4.0 |
| Laser Spot Size (mm) | | 6 x 6 |
| Laser Defocusing Distance (mm) | | 0 |
| Spoolarc^{™} 95 filler wire diameter (mm) | | 1.2 |
| Wire Feed Speed (m/min) | | Varied |
| Welding Speed (m/min) | | Varied |
| Shielding gas (l/min) | | Ar (23) |
| Shielding torch cup diameter (mm) | | 19 |
| TIP-TIG wire stick-out length (mm) | | 50 |
| Hot Filler Wire Current (A) | | 100 |
| Build-up bead Offset (mm) | | Varied |
| Preheat Temperature (°C) | | Preheat not required |
| Interpass Temperature (°C) | Max. | 150 |
| | Min. | No min. required |

During build-up welding experimental, the laser power was maintained constant at 4 kW. The power density is around 14 kW/cm², whereas the welding speed and wire feed rate were varied to adjust heat input and bead profile. Build-up welding was conducted with the passes running along the rolling direction of the base metal. After welding, the welded specimen was naturally cooled to room temperature. It is worth emphasizing that the welding position for both laser build-up welding procedure development and fabricating coupons for the qualification test was in a vertical up (3G) position **130** as shown in Figure 1.

To examine the effect of heat input on the bead profile, microstructure, and mechanical properties, laser power, hot filler wire current and voltage were maintained constant while the travel speed and wire feed speed were varied.

### Tests and Results

The welding speed was varied from 5 mm/s to 8 mm/s. The total power from the laser beam and the hot filler wire is calculated to be 4.5 kW. Consequently, the heat input is calculated to be from 0.56 to 0.9 kJ/mm, respectively.

After welding, the examination and inspection show that the heat input of 0.56 kJ/mm seems to be close to the minimum heat input required to avoid the lack-of-fusion between the substrate and the first layer weld and in the multi-layer build-up weld metal.

The maximum heat input is determined based on the toughness of the weld metal. The toughness of the weld metal was determined by Charpy V-notch (CVN) impact test per ASTM E23 using an Instron 750MPX machine at room temperature and -50°C, which are required for the weld joint per Canadian Defence Standard 02-770 (NES 770). The notch location was in the center of the weld to determine the impact toughness of the weld metal. All weld metal full-sized CVN specimens were machined transverse to the welding length and notched through-thickness from the weld metal.

Firstly, laser multi-layer build-up welding of the grooved HY-80 plate was conducted at room temperature without preheating to evaluate the Charpy V-notch toughness. The test results demonstrate that the Charpy V-notch toughness of weld metal produced with a heat input of 0.9 kJ/mm can not meet the impact toughness acceptance criteria required by the standard. On the contrary, the impact toughness of the weld metal produced with a welding heat input of 0.56 kJ/mm and 0.75 kJ/mm meet the Charpy V-notch toughness acceptance criteria required by the standard, with the heat input of 0.56 kJ producing the weld metal with higher toughness.

Secondly, laser multi-layer build-up welding of the grooved HY-80 plate is conducted at room temperature without preheating and with the optimized welding procedures. The first two layers were welded with a heat input of 0.75 kJ/mm, and the subsequent layers were welded with a heat input of 0.56 kJ/mm. The welded groove plate was inspected by ultrasonic non-destructive testing. The results show there are no crack in the heat affected zone, and no lack of fusion, between the substrate and weld metal, and in the weld build-ups.

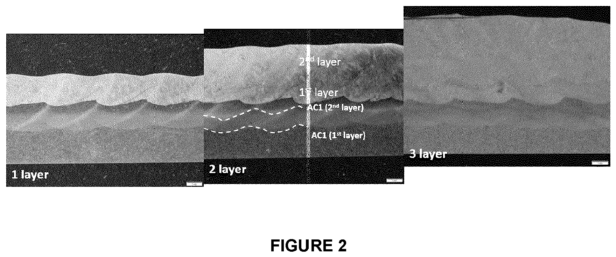

Figure 2 shows a macrostructure of the three layers sample. The first two layers were welded with a heat input of 0.75 kJ/mm. while the third layer is welded with a heat input of 0.56 kJ/mm. The wire feed speed was adjusted to produce the first and the second layers with a thickness of 1.65 mm, a penetration of 0.38 mm, and a heat affected zone depth of 1.85 mm. The welding of the first layer produces a heat affected zone in the substrate (from the fusion line to the A_{C1} line). The A_{C1} line of the second layer is located in the heat affected zone, thus the heat from the second layer welding refines the microstructure of the coarse grained heat affected zone to improve the toughness. The characterization of the microstructure and evaluation of microhardness in the heat affected zone show that the heat affected zone of the first layer is grain refined by the heat from the second layer and tempered by the third layer.

The thickness, penetration, and heat affected zone depth of the third and subsequent layers, welded a heat input of 0.56 kJ/mm, were controlled by adjusting wire feed speed to be 1.26 mm, 0.49 mm, and 1.56 mm, respectively. The characterization of the microstructure and evaluation of microhardness of weld metal show that the majority of the previous layer is grain refined by the heat from the subsequent layer.

The Charpy V-notch impact test shows that the average toughness of the heat affected zone and the weld metal are 159 J and 128 J at - 50 °C, respectively, meeting the impact toughness acceptance criteria required by the standard, which is 50 J minimum.

The fracture toughness, i.e., the Crack Tip Opening Displacement (CTOD), of the weld metal was determined. CTOD testing was conducted in accordance with the methods outlined in ISO 12135:2016 and 15653:2018. Testing was performed on specimens of B x B (B=28 mm) with surface notch locations (N-Q orientation) targeting the weld centerline. CTOD testing was performed at a temperature of -5 °C. The test results show an average of CTOD of 0.26 mm with a minimum value of 0.11 mm. According to the acceptance criteria defined in Def Stan 02-770 Part 2, to qualify the welding procedure, four of five CTOD results must be greater than 0.1 mm, and the minimum CTOD must be greater than 0.07 mm. It is clearly shown that the CTOD results of weld metal meet Def Stan 02-770 requirement.

The transverse tensile and all weld metal tensile test were carried out at an ambient temperature according to ASME Section IX-2017 and ASTM E8/E8M, respectively. The average yield strength and elongation of all weld metal sample was determined to be 881 MPa and 21%, respectively. The yield strength of the tensile specimens exceeds 550 MPa and the elongation exceeds 18%, which are the minimum requirements for HY-80 steel plate welding (Defence Standard 02-770 part 2). The transverse tensile test samples (cross weld) fractured in the base metal rather than from fusion boundary or the heat affected zone. The yield strength, tensile strength and elongation of the transverse tensile specimen were 632 MPa, 746 MPa and 17%, respectively.

Explosion Bulge tests were carried out. The specimens were prepared by performing thickness measurements over the entire specimen using an ultrasonic thickness gauge, and 3D profiling to assess weld distortion using Digital Image Correlation. A typical high explosive charge configuration was chosen, consisting of a cylindrical C4 charge of 10 kg in mass, approximately 12 inches in diameter and 3.5 inches high. The standoff distance from the charge to the specimen surface was estimated for each specimen using correlations based on numerical models validated with data from previous Explosion Bulge trials. The charge standoff was adjusted during the course of trials to compensate for small variations in the deformation behaviour of each specimen. The specimens were placed in freezers 24 hours before a trial to cool them to approximately -17°C. All weld configurations were found to pass the Explosion Bulge test.

Various experiments and tests have been performed in the development of the method and techniques disclosed herein. These experimental results are not intended to limit the invention as claimed or as described above but help to provide context for the method disclosed herein.

While the present invention has been described in considerable detail with reference to certain preferred and/or exemplary embodiments, it will be understood by those skilled in the art that various changes may be made, and equivalents may be substituted for elements thereof without departing from the scope of the present invention as defined in the appended claims.

## Claims

1. A method for build-up welding by low power density laser direct energy deposition upon a substrate to be welded, without preheating the substrate, or preheating the substrate to a temperature below 90 °C, the method comprising the steps of:
directing a laser beam (154) onto the substrate to melt a portion of the substrate to form a molten pool;
supplying a hot filler wire (141) as a filler material to produce a welded build-up as a first layer (120); wherein the hot filler wire (120) is resistance-heated, optionally by a separate energy source
advancing the hot filler wire (141) towards and into the molten pool formed by the laser beam (154);
optionally electricity is shorted to prevent a traditional arc such that the hot filler wire (120) reaches its melting point and contacts the molten pool; and
wherein the laser beam (154) is directed perpendicular or substantially perpendicular to the substrate, and
the method being **characterised in that**:
the wire feed speed is adjusted to a value to produce a weld bead having an aspect ratio of 3 to 6, more preferably 4 to 5, wherein the aspect ratio is defined as ratio of the bead width divided by the bead height.

2. The method of claim 1, wherein the laser direct energy deposition is performed with a CO₂ laser, a YAG laser, a diode laser, a disc laser or a fiber laser.

3. The method of claim 1, wherein the method produces a crack-free heat affected zone.

4. The method of claim 1, wherein a first layer (120) of weld material is deposited with a heat input between the minimum and the maximum heat input, preferably with a maximum allowable heat input to avoid deterioration of Charpy V-notch toughness and fracture toughness of the weld, with an increased cooling time t_{8/5} and t_{8/3}, to minimize the formation of untempered martensite in the heat affected zone to avoid cracks.

5. The method of claim 4, wherein a second layer (120) of welded material is deposited on top of the first layer with a heat input between the minimum and the maximum heat input, preferably with the maximum allowable heat input, to preferably refine the microstructure, or temper the martensite of the heat affected zone associated with the first layer (120).

6. The method of claim 5, wherein subsequent layers (120) of welded material are deposited with a heat input between the minimum and the maximum heat input, preferably with the minimum heat input while maintaining the required interpass temperature to maximize the Charpy V-notch toughness and fracture toughness of the weld metal.

7. The method of any one of claims 1 to 6, wherein the laser beam (154) has a spot size, on the surface of the substrate that is from 3 mm to 10 mm, preferably from 5 mm to 7mm, in diameter.

8. The method of any one of claims 1 to 7, wherein the laser beam (154) has a power of from 2 to 8 kW, preferably from 3 to 6 kW, and more preferably from 3.5 to 5 kW.

9. The method of any one of claims 1 to 8, wherein the welding method proceeds at a speed of 5-20 mm/s, preferably from 6-15 mm/s, more preferably from 6-8 mm/s.

10. The method of any one of claims 1 to 9, wherein the laser power density is in the range of 10-40 kW/cm², preferably 12-28 kW/cm².

11. The method of any one of claims 1 to 10, wherein the heat input from the laser beam (154) is in a range of from 0.2-1.2 kJ/mm, preferably from 0.5-0.8 kJ/mm.

12. The method of any one of claims 1 to 11, wherein the filler wire (141) is heated by an electric current of from 70-120 A, preferably 80-100 A, before being inserted into the molten pool.

13. The method of any one of claims 1 to 12, wherein the method includes no preheating of the substrate.

14. The method of any one of claims 1 to 13, wherein the method is carried out in a flat position (1G), a horizontal position (2G), or a vertical (3G) uphill position.

15. The method of any one of claims 1 to 13, wherein the method is carried out with hot Spoolarc^{™} 95 filler wire onto the surface of HY-80 steel in a flat position (1G), a horizontal position (2G), or a vertical uphill (3G) position.

16. The method of any one of claims 1 to 15, wherein the filler material is a solid wire, flux-cored wire, or powder.

17. The method of claim 16, wherein the filler wire (141) is fed using a welding torch, the filler wire is selected from the group consisting of ER70s, ER100s, ER120S, Spoolarc^{™} 86, and Spoolarc^{™} 95.

## Patentansprüche

1. Verfahren zum Auftragsschweißen durch direkte Laserenergieabgabe mit geringer Leistungsdichte auf ein zu schweißendes Substrat, ohne das Substrat vorzuwärmen oder das Substrat auf eine Temperatur unter 90 °C vorzuwärmen, wobei das Verfahren die folgenden Schritte aufweist:
Richten eines Laserstrahls (154) auf das Substrat, um einen Teil des Substrats zu schmelzen und ein Schmelzbad zu bilden;
Zuführen eines heißen Füllstoffdrahtes (141) als Füllstoffmaterial, um einen geschweißten Aufbau als erste Schicht (120) zu erzeugen, wobei der heiße Füllstoffdraht (120) widerstandsbeheizt wird, optional durch eine separate Energiequelle;
Vorschieben des heißen Füllstoffdrahtes (141) in Richtung des durch den Laserstrahl (154) gebildeten Schmelzbades und in dieses hinein;
optional wird Elektrizität kurzgeschlossen, um einen herkömmlichen Lichtbogen zu verhindern, so dass der heiße Füllstoffdraht (120) seinen Schmelzpunkt erreicht und mit dem Schmelzbad in Kontakt kommt; und
wobei der Laserstrahl (154) senkrecht oder im Wesentlichen senkrecht zu dem Substrat gerichtet ist, und
das Verfahren **dadurch gekennzeichnet ist, dass**:
die Drahtvorschubgeschwindigkeit auf einen Wert eingestellt wird, um eine Schweißraupe mit einem Aspektverhältnis von 3 bis 6, vorzugsweise 4 bis 5, zu erzeugen, wobei das Aspektverhältnis als Verhältnis der Raupenbreite geteilt durch die Raupenhöhe definiert ist.

2. Verfahren nach Anspruch 1, bei dem die direkte Laserenergieabgabe mit einem CO₂-Laser, einem YAG-Laser, einem Diodenlaser, einem Scheibenlaser oder einem Faserlaser durchgeführt wird.

3. Verfahren nach Anspruch 1, wobei das Verfahren einen rissfreien, wärmebeeinflussten Bereich erzeugt.

4. Verfahren nach Anspruch 1, bei dem eine erste Schicht (120) aus Schweißmaterial mit einer Wärmezufuhr zwischen der minimalen und der maximalen Wärmezufuhr abgelagert wird, vorzugsweise mit einer maximal zulässigen Wärmezufuhr, um eine Verschlechterung der Charpy-V-Einkerbungszähigkeit und der Bruchfestigkeit der Schweißstelle zu vermeiden, mit einer erhöhten Abkühlzeit t_{8/5} und t_{8/3}, um die Bildung von ungetempertem Martensit in dem wärmebeeinflussten Bereich zu minimieren, um Risse zu vermeiden.

5. Verfahren nach Anspruch 4, bei dem eine zweite Schicht (120) aus Schweißmaterial oben auf der ersten Schicht mit einer Wärmezufuhr zwischen der minimalen und der maximalen Wärmezufuhr, vorzugsweise mit der maximal zulässigen Wärmezufuhr, abgelagert wird, um vorzugsweise die Mikrostruktur zu verfeinern oder den Martensit des wärmebeeinflussten Bereichs, der mit der ersten Schicht (120) einhergeht, zu tempern.

6. Verfahren nach Anspruch 5, bei dem nachfolgende Schichten (120) aus geschweißtem Material mit einer Wärmezufuhr zwischen der minimalen und der maximalen Wärmezufuhr, vorzugsweise mit der minimalen Wärmezufuhr, aufgebracht werden, während die erforderliche Zwischenschichttemperatur aufrechterhalten wird, um die Charpy-V-Einkerbungszähigkeit und die Bruchzähigkeit des Schweißmetalls zu maximieren.

7. Verfahren nach einem der Ansprüche 1 bis 6, bei dem der Laserstrahl (154) eine Spotgröße auf der Oberfläche des Substrats von 3 mm bis 10 mm, vorzugsweise von 5 mm bis 7 mm, im Durchmesser aufweist.

8. Verfahren nach einem der Ansprüche 1 bis 7, bei dem der Laserstrahl (154) eine Leistung von 2 bis 8 kW, vorzugsweise von 3 bis 6 kW und stärker bevorzugt von 3,5 bis 5 kW aufweist.

9. Verfahren nach einem der Ansprüche 1 bis 8, bei dem das Schweißverfahren mit einer Geschwindigkeit von 5-20 mm/s, vorzugsweise von 6-15 mm/s, stärker bevorzugt von 6-8 mm/s, voranschreitet.

10. Verfahren nach einem der Ansprüche 1 bis 9, bei dem die Laserleistungsdichte im Bereich von 10-40 kW/cm², vorzugsweise von 12-28 kW/cm², liegt.

11. Verfahren nach einem der Ansprüche 1 bis 10, bei dem die Wärmezufuhr von dem Laserstrahl (154) in einem Bereich von 0,2-1,2 kJ/mm, vorzugsweise von 0,5-0,8 kJ/mm, liegt.

12. Verfahren nach einem der Ansprüche 1 bis 11, bei dem der Füllstoffdraht (141) durch einen elektrischen Strom von 70-120 A, vorzugsweise 80-100 A, erhitzt wird, bevor er in das Schmelzbad eingeführt wird.

13. Verfahren nach einem der Ansprüche 1 bis 12, bei dem das Verfahren kein Vorheizen des Substrats beinhaltet.

14. Verfahren nach einem der Ansprüche 1 bis 13, bei dem das Verfahren in einer flachen Position (1G), einer horizontalen Position (2G) oder einer vertikalen (3G) aufsteigenden Position durchgeführt wird.

15. Verfahren nach einem der Ansprüche 1 bis 13, bei dem das Verfahren mit heißem Spoolarc^{™} 95-Füllstoffdraht auf der Oberfläche von HY-80-Stahl in einer flachen Position (1G), einer horizontalen Position (2G) oder einer vertikalen aufsteigenden (3G) Position durchgeführt wird.

16. Verfahren nach einem der Ansprüche 1 bis 15, bei dem das Füllstoffmaterial ein Massivdraht, ein Fülldraht oder ein Pulver ist.

17. Verfahren nach Anspruch 16, bei dem der Füllstoffdraht (141) unter Verwendung eines Schweißbrenners zugeführt wird, wobei der Füllstoffdraht aus der Gruppe ausgewählt ist, die aus ER70s, ER100s, ER120S, Spoolarc^{™} 86 und Spoolarc^{™} 95 besteht.

## Revendications

1. Un procédé de soudage à rechargement par dépôt direct laser d'énergie directe à basse densité de puissance sur un substrat à souder, sans préchauffer le substrat ou en préchauffant le substrat à une température en dessous de 90°C, le procédé comprenant les stades :
diriger un faisceau (154) laser sur le substrat pour faire fondre une partie du substrat afin de former un bain fondu ;
fournir un fil (141) chaud de remplissage comme matière de remplissage pour produire une recharge soudée comme première couche (120) ;
faire avancer le fil (141) chaud de remplissage vers et dans le bain fondu, formé par le faisceau (154) laser ;
dans lequel le fil (120) chaud de remplissage est chauffé par résistance, éventuellement par une source distincte d'énergie,
éventuellement de l'électricité est arrêtée pour empêcher un arc traditionnel tel que le fil (120) chaud de remplissage atteigne son point de fusion et entre en contact avec le bain fondu ; et
dans lequel le faisceau (154) laser est dirigé perpendiculairement ou sensiblement perpendiculairement au substrat et,
le procédé étant **caractérisé en ce que** :
la vitesse d'alimentation du fil est réglée à une valeur pour produire une goutte de soudure d'un rapport d'aspect de 3 à 6, d'une manière plus préférée de 4 à 5, dans lequel le rapport d'aspect est défini comme rapport de la largeur de la goutte divisée par la hauteur de la goutte.

2. Le procédé de la revendication 1, dans lequel le dépôt direct par laser d'énergie est effectué avec un laser à CO₂, un laser à YAG, un laser à diode, un laser à disque ou un laser à fibre.

3. Le procédé de la revendication 1, dans lequel le procédé produit une zone affectée par la chaleur sans fissure.

4. Le procédé de la revendication 1, dans lequel une première couche (120) de matière de soudure est disposée avec un apport de chaleur entre l'apport de chaleur minimum et l'apport de chaleur maximum, de préférence avec un apport de chaleur maximum, admissible pour empêcher une détérioration de la dureté Charpy à entaille en V et de la dureté à la rupture de la soudure avec un temps t_{8/5} et t_{8/3} de refroidissement augmenté, pour minimiser la formation de martensite non trempée dans la zone affectée par de la chaleur, afin d'empêcher des fissures.

5. Le procédé de la revendication 4, dans lequel une deuxième couche (120) de matière soudée est déposée au sommet de la première couche avec une entrée de chaleur entre l'apport de chaleur minimum et l'apport de chaleur maximum, de préférence avec l'apport de chaleur maximum admissible pour raffiner de préférence la microstructure ou tremper la martensite de la zone affectée par la chaleur, associée à la première couche (120).

6. Le procédé de la revendication 5, dans lequel des couches (120) suivantes de matière soudée sont disposées avec un apport de chaleur entre l'apport de chaleur minimum et l'apport de chaleur maximum, de préférence, avec l'apport de chaleur minimum, tout en maintenant la température requise entre passes pour maximiser la dureté Charpy à entaille en V et la dureté à la rupture du métal de soudure.

7. Le procédé de l'une quelconque des revendications 1 à 6, dans lequel le faisceau (154) laser a une dimension de tache sur la surface du substrat, qui va de 3 mm à 10 mm, de préférence, de 5 mm à 7 mm de diamètre.

8. Le procédé de l'une quelconque des revendications 1 à 7, dans lequel le faisceau (154) laser a une puissance allant de 2 à 8 kW, de préférence de 3 à 6 kW, et d'une manière encore plus préférée de 3,5 à 5 kW.

9. Le procédé de l'une quelconque des revendications 1 à 8, dans lequel le procédé de soudage procède à une vitesse de 5 à 20 mm/s, de préférence de 6 à 15 mm/s, d'une manière encore plus préférée de 6 à 8 mm/s.

10. Le procédé de l'une quelconque des revendications 1 à 9, dans lequel la densité de puissance laser est dans la plage de 10 à 40 kW/cm², de préférence de 12 à 28 kW/cm².

11. Le procédé de l'une quelconque des revendications 1 à 10, dans lequel l'apport de chaleur provenant du faisceau (154) laser est dans une plage allant de 0,2 à 1,2 kJ/mm, allant de préférence de 0,5 à 0,8 kJ/mm.

12. Le procédé de l'une quelconque des revendications 1 à 11, dans lequel le fil (141) de remplissage est chauffé par un courant électrique allant de 70 à 120 A, de préférence de 80 à 100 A, avant d'être inséré dans le bain fondu.

13. Le procédé de l'une quelconque des revendications 1 à 12, dans lequel le procédé ne comprend pas de préchauffage du substrat.

14. Le procédé de l'une quelconque des revendications 1 à 13, dans lequel le procédé est effectué dans une position (1G) à plat, une position (2G) horizontale ou une position de montée verticale (3G).

15. Le procédé de l'une quelconque des revendications 1 à 13, dans lequel le procédé est effectué avec un fil de remplissage chaud Spoolarc (marque de fabrique) 95 sur la surface d'un acier HY-80 dans une position (1G) à plat, une position (2G) horizontale ou une position de montée (3G) verticale.

16. Le procédé de l'une quelconque des revendications 1 à 15, dans lequel le matériau de remplissage est un fil plein, un fil à noyau à flux ou de la poudre.

17. Le procédé de la revendication 16, dans lequel le fil (141) de remplissage est alimenté en utilisant une torche de soudage, le fil de remplissage est sélectionné dans le groupe consistant en ER70s, ER100s, ER120S, Spoolarc (marque de fabrique) 86 et Spoolarc (marque de fabrique) 95.
